# EUROPÄISCHE PATENTANMELDUNG

(11) **EP 4 350 091 A1**
(43) Veröffentlichungstag der Anmeldung: **10.04.2024**
(21) Anmeldenummer: 23195769.7
(22) Anmeldetag: 06.09.2023
(51) Int. Cl.: E03C 1/23, F16C 1/10

(54) **BETÄTIGUNGSVORRICHTUNG ZUM ÖFFNEN ODER SCHLIESSEN EINES VENTILS EINER ABLAUFANORDNUNG SOWIE ABLAUFSYSTEM**

(30) Priorität: 19.09.2022 DE 102022209842
(71) Anmelder: BLANCO GmbH + Co KG, 75038 Oberderdingen (DE)
(72) Erfinder: Koska, Reinhard, 76228 Karlsruhe (DE); Frank, Manuel, 75038 Oberderdingen (DE); Kahl-Marburger, Georg, 74172 Neckarsulm (DE)
(74) Vertreter: Ullrich & Naumann PartG mbB

(57) **Zusammenfassung**

Die Erfindung betrifft eine Betätigungsvorrichtung zum Öffnen oder Schließen eines Ventils einer Ablaufanordnung, umfassend
eine Betätigungseinrichtung, wobei
die Betätigungseinrichtung eine Rastvorrichtung umfasst, welche eine erste Rastposition und eine zweite Rastposition bereitstellt, und
eine Bedieneinrichtung für die Betätigungseinrichtung, wobei die Bedieneinrichtung ein Bedienelement umfasst, mit welchem die Rastvorrichtung von der ersten Rastposition in die zweite Rastposition bringbar ist oder von der zweiten Rastposition in die erste Rastposition, und wobei die Bedieneinrichtung eine Führung umfasst, in welcher das Bedienelement beim Wechsel zwischen einer ersten Anzeigeposition und einer zweiten Anzeigeposition geführt ist, wobei
die erste Anzeigeposition zu der ersten Rastposition und die zweite Anzeigeposition zu der zweiten Rastposition korrespondiert, wobei das Bedienelement in der zweiten Anzeigeposition auf derselben Höhe relativ zu der Führung angeordnet ist, wobei
die Betätigungseinrichtung und die Bedieneinrichtung separat ausgebildet sind und aneinander festlegbar sind, wobei im festgelegten Zustand aneinander der Bereich der Bedieneinrichtung frei von elastischen Elementen, insbesondere von Federelementen, zur Bereitstellung der ersten und zweiten Anzeigeposition ist.

## Beschreibung

Die Erfindung betrifft eine Betätigungsvorrichtung zum Öffnen oder Schließen eines Ventils einer Ablaufanordnung, umfassend eine Betätigungseinrichtung, wobei die Betätigungseinrichtung eine Rastvorrichtung umfasst, welche eine erste Rastposition und eine zweite Rastposition bereitstellt, und eine Bedieneinrichtung für die Betätigungseinrichtung, wobei die Bedieneinrichtung ein Bedienelement umfasst, mit welchem die Rastvorrichtung von der ersten Rastposition in die zweite Rastposition bringbar ist oder von der zweiten Rastposition in die erste Rastposition, und wobei die Bedieneinrichtung eine Führung umfasst, in welcher das Bedienelement beim Wechsel zwischen einer ersten Anzeigeposition und einer zweiten Anzeigeposition geführt ist, wobei die erste Anzeigeposition zu der ersten Rastposition und die zweite Anzeigeposition zu der zweiten Rastposition korrespondiert, wobei das Bedienelement in der zweiten Anzeigeposition auf derselben Höhe relativ zu der Führung angeordnet ist.

Die Erfindung betrifft weiter ein Ablaufsystem, umfassend eine Betätigungsvorrichtung, ein Kraftübertragungselement und ein Ventil, wobei das Kraftübertragungselement einerseits mit der Betätigungsvorrichtung, andererseits mit dem Ventil verbunden ist, derart, dass mittels der Betätigungsvorrichtung das Ventil von einer geschlossenen in eine geöffnete Position oder von einer geöffneten in eine geschlossene Position bringbar ist.

Obwohl die vorliegende Erfindung allgemein auf beliebige Ablaufanordnungen anwendbar ist, wird die vorliegende Erfindung in Bezug auf Ablaufanordnungen für Spülbecken erläutert.

Bekannte Spülen weisen ein Spülbecken auf, dessen Abflussöffnung beispielsweise mit einer mechanischen Betätigungseinrichtung zum Bewegen eines Verschlusselements zum Verschließen und Öffnen eines Ventils der Spüle versehen ist. Hierzu ist es bekannt geworden, auf der Oberseite der Spüle einen Drehbetätigungsknopf vorzusehen, mit welchem eine vertikale Bewegung des Verschlusselements von einer Offenstellung in eine Geschlossenstellung oder umgekehrt ermöglicht wird, wenn dieser von einem Benutzer der Spüle gedreht wird. Hierbei wird die Drehbewegung des Drehbetätigungsknopfs, beispielsweise mittels eines Bowdenzugs, in eine lineare Bewegung des Verschlusselements des Ventils umgewandelt.

Nachteilig dabei ist, dass ein solcher Drehbetätigungsknopf an der Oberseite der Spüle die Reinigung des Spülbeckens behindert und zur Verschmutzung neigt, da sich Kalk, Schmutz und dergleichen an beziehungsweise unter dem Drehbetätigungsknopf ablagern können.

Zur Lösung des Problems ist deshalb vorgeschlagen worden, anstelle der Drehbetätigungsknöpfe ganz oder teilweise versenkbare Druckknöpfe für die Betätigung vorzusehen. Ein solcher Druckknopf ist beispielsweise aus der EP 3 348 719 A1 bekannt geworden. Die EP 3 348 719 A1 zeigt eine Betätigungsvorrichtung zum Öffnen und Schließen eines Ventils einer Ablaufanordnung für ein Becken, wobei die Betätigungsvorrichtung eine Rastvorrichtung umfasst, welche ein erstes Rastelement und zweites Rastelement umfasst, wobei das erste Rastelement und das zweite Rastelement in mindestens einer ersten Rastposition und einer zweiten Rastposition der Rastvorrichtung miteinander verrastbar sind, ein Betätigungselement, welches von einer Bedienungsperson manuell von einer Ruheposition in eine Arbeitsposition, in welcher das Betätigungselement mit dem ersten Rastelement zusammenwirkt, um die Rastvorrichtung von der ersten Rastposition in die zweite Rastposition oder von der zweiten Rastposition in die erste Rastposition zu überführen, verschiebbar ist, und eine Führung, an welcher das Betätigungselement während der Verschiebung von der Ruheposition in die Arbeitsposition geführt ist. Das Betätigungselement ist dabei unabhängig davon, ob die Rastvorrichtung sich in der ersten Rastposition oder in der zweiten Rastposition befindet, in der Ruheposition auf derselben Höhe relativ zu der Führung angeordnet.

Nachteilig dabei ist jedoch der komplizierte Aufbau der Betätigungsvorrichtung.

Eine Aufgabe der vorliegenden Erfindung ist es daher, eine Betätigungsvorrichtung zum Öffnen oder Schließen eines Ventils einer Ablaufanordnung und ein Ablaufsystem anzugeben, welche einen einfacheren und kostengünstigeren Aufbau aufweisen und gleichzeitig einfacher und kostengünstiger hinsichtlich ihrer optischen Anmutung individualisierbar sind.

Eine weitere Aufgabe der vorliegenden Erfindung ist es, eine alternative Betätigungsvorrichtung zum Öffnen oder Schließen eines Ventils einer Ablaufanordnung und ein alternatives Ablaufsystem anzugeben.

In einer Ausführungsform löst die vorliegende Erfindung die vorstehend genannten Aufgaben bei einer eine Betätigungsvorrichtung zum Öffnen oder Schließen eines Ventils einer Ablaufanordnung, umfassend
eine Betätigungseinrichtung, wobei
die Betätigungseinrichtung eine Rastvorrichtung umfasst, welche eine erste Rastposition und eine zweite Rastposition bereitstellt, und eine Bedieneinrichtung für die Betätigungseinrichtung, wobei die Bedieneinrichtung ein Bedienelement umfasst, mit welchem die Rastvorrichtung von der ersten Rastposition in die zweite Rastposition bringbar ist oder von der zweiten Rastposition in die erste Rastposition, und wobei die Bedieneinrichtung eine Führung umfasst, in welcher das Bedienelement beim Wechsel zwischen einer ersten Anzeigeposition und einer zweiten Anzeigeposition geführt ist, wobei
die erste Anzeigeposition zu der ersten Rastposition und die zweite Anzeigeposition zu der zweiten Rastposition korrespondiert, wobei das Bedienelement in der zweiten Anzeigeposition auf derselben Höhe relativ zu der Führung angeordnet ist, dadurch, dass
die Betätigungseinrichtung und die Bedieneinrichtung separat ausgebildet sind und aneinander festlegbar sind, wobei im festgelegten Zustand aneinander der Bereich der Bedieneinrichtung frei von elastischen Elementen, insbesondere von Federelementen, zur Bereitstellung der ersten und zweiten Anzeigeposition ist.

In einer weiteren Ausführungsform löst die vorliegende Erfindung die vorstehend genannten Aufgaben ebenfalls durch ein Ablaufsystem, umfassend eine Betätigungsvorrichtung gemäß einem der Ansprüche 1-14,
ein Kraftübertragungselement und
ein Ventil, wobei
das Kraftübertragungselement einerseits mit der Betätigungsvorrichtung, andererseits mit dem Ventil verbunden ist, derart, dass mittels der Betätigungsvorrichtung das Ventil von einer geschlossenen in eine geöffnete Position oder von einer geöffneten in eine geschlossene Position bringbar ist.

Einer der damit erzielten Vorteile ist ein einfacherer und kostengünstigerer Aufbau, da insbesondere auf ein bisher notwendiges Federelement in beziehungsweise im Bereich der Bedieneinrichtung verzichtet werden kann. Zudem wird die Montage vereinfacht.

Weitere Merkmale, Vorteile und weitere Ausführungsformen der Erfindung sind im Folgenden beschrieben oder werden dadurch offenbar.

Gemäß einer vorteilhaften Weiterbildung der Erfindung weist die Rastvorrichtung eine Kugelschreibermechanik auf. Damit wird eine kostengünstige und gleichzeitig zuverlässige Rastmechanik für die Rastvorrichtung bereitgestellt.

Gemäß einer weiteren vorteilhaften Weiterbildung der Erfindung weist die Rastvorrichtung ein verschiebbar angeordnetes Funktionselement auf, wobei das Funktionselement gegenüber einem Gehäuse der Betätigungseinrichtung in eine eingezogene Position und in eine ausgefahrene Position bringbar ist, wobei die ausgefahrene Position zu der zweiten Rastposition und die eingezogene Position zu der ersten Rastposition korrespondiert. Vorteil hiervon ist, dass mittels der Rastvorrichtung eine lineare Bewegung des Funktionselements zwischen den beiden Rastpositionen bereitgestellt werden kann.

Gemäß einer weiteren vorteilhaften Weiterbildung der Erfindung weist das Funktionselement eine Ankoppeleinrichtung zur insbesondere lösbaren Ankopplung eines Kraftübertragungselements, insbesondere eines Bowdenzugs, auf. Vorteil hiervon ist eine Koppelmöglichkeit mit einem Kraftübertragungselement, welches die verschiedenen Positionen des Funktionselements auf ein Ventil oder dergleichen mittels eines Kraftübertragungselements übertragen kann.

Gemäß einer weiteren vorteilhaften Weiterbildung der Erfindung sind die Betätigungseinrichtung und die Bedieneinrichtung im festgelegten Zustand aneinander unlösbar miteinander verbunden. Vorteil hiervon ist einerseits eine einfache Montage, da Betätigungseinrichtung und Bedieneinrichtung auf einfache Weise zusammengefügt werden können, andererseits anschließend eine zuverlässige Festlegung der Betätigungseinrichtung und der Bedieneinrichtung bereitgestellt wird.

Gemäß einer weiteren vorteilhaften Weiterbildung der Erfindung sind die Betätigungseinrichtung und die Bedieneinrichtung formschlüssig, insbesondere mittels einer Klipsverbindung, aneinander festlegbar. Vorteil hiervon ist eine einfache und schnelle Festlegung von Betätigungseinrichtung und Bedieneinrichtung aneinander.

Gemäß einer weiteren vorteilhaften Weiterbildung der Erfindung sind die Führung und das Bedienelement aus unterschiedlichen Materialien hergestellt. Vorteil hiervon ist eine flexible Individualisierung der Betätigungsvorrichtung für unterschiedliche Anwendungsbereiche.

Gemäß einer weiteren vorteilhaften Weiterbildung der Erfindung weist die Bedieneinrichtung einen Festlegungsbereich und einen Führungsbereich auf, wobei in dem Führungsbereich die Führung für das Bedienelement angeordnet ist und wobei der Festlegungsbereich zum Festlegen der Bedieneinrichtung an der Betätigungseinrichtung ausgebildet ist. Somit kann, wenn die Festlegung auf immer gleiche Weise erfolgt, der Festlegungsbereich für eine Vielzahl von Bedieneinrichtungen unverändert hergestellt werden, lediglich der Führungsbereich kann dann unterschiedlich gestaltet werden. Dies erhöht die Anzahl von Gleichteilen, gleichzeitig wird die Flexibilität hinsichtlich der Anpassbarkeit an unterschiedliche Anforderungen und Einsatzgebiete erhöht.

Gemäß einer weiteren vorteilhaften Weiterbildung der Erfindung sind ein Gehäuse des Festlegungsbereichs und ein Gehäuse des Führungsbereichs einstückig miteinander verbunden ausgebildet. Vorteil hiervon ist eine einfache Konstruktion des Gehäuses der Bedieneinrichtung.

Gemäß einer weiteren vorteilhaften Weiterbildung der Erfindung ist das Bedienelement austauschbar und/oder verdrehsicher in der Bedieneinrichtung angeordnet. Vorteil hiervon ist eine zuverlässige Führung des Bedienelements und eine verbesserte Haptik und/oder ein hoher Flexibilisierungsgrad des Bedienelements hinsichtlich Material, Farbe etc.

Gemäß einer weiteren vorteilhaften Weiterbildung der Erfindung sind eine Oberseite der Führung und eine Oberseite des Betätigungselements in der zweiten Anzeigeposition im Wesentlichen bündig zueinander angeordnet. Vorteil hiervon sind eine verbesserte Haptik und eine hohe optische Anmutung. Gleichzeitig wird die Handhabbarkeit verbessert, da das Betätigungselement in der zweiten Anzeigeposition nicht über die Führung hinausragt und so einen Nutzer behindert.

Gemäß einer weiteren vorteilhaften Weiterbildung der Erfindung weist die Führung einen Führungsflansch zur Anlage an einer Ebene, insbesondere einer Spülenoberfläche oder einer Arbeitsplatte, auf. Damit wird eine einfache und zuverlässige Anordnung der Betätigungsvorrichtung ermöglicht.

Gemäß einer weiteren vorteilhaften Weiterbildung der Erfindung ist ein Dichtelement, vorzugsweise in Form eines X-Rings, zwischen Betätigungselement und Führung angeordnet, insbesondere wobei das Dichtelement am Betätigungselement angeordnet ist. Damit wird das Eindringen von Schmutz und Wasser in den Innenraum der Bedieneinrichtung zuverlässig vermieden.

Gemäß einer weiteren vorteilhaften Weiterbildung der Erfindung ist das Dichtelement an das Betätigungselement angespritzt. Vorteil hiervon ist eine schnelle Herstellung. So kann beispielsweise das Dichtelement mittels 2-Komponenten-Spritzgießen an das Betätigungselement angespritzt werden.

Weitere wichtige Merkmale und Vorteile der Erfindung ergeben sich aus den Unteransprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt
- Fig. 1: in schematischer Form in einer Explosionsdarstellung eine bekannte Betätigungsvorrichtung;
- Fig. 2: in schematischer Form in einer Explosionsdarstellung eine Betätigungsvorrichtung gemäß einer Ausführungsform der vorliegenden Erfindung;
- Fig. 3: in schematischer Form und im Querschnitt eine Betätigungsvorrichtung gemäß Figur 2 in der Anzeigeposition geschlossen;
- Fig. 4: in schematischer Form und im Querschnitt eine Betätigungsvorrichtung gemäß Figur 2 in der Anzeigeposition geöffnet; und
- Fig. 5: in schematischer Form ein Ablaufsystem gemäß einer Ausführungsform der vorliegenden Erfindung.

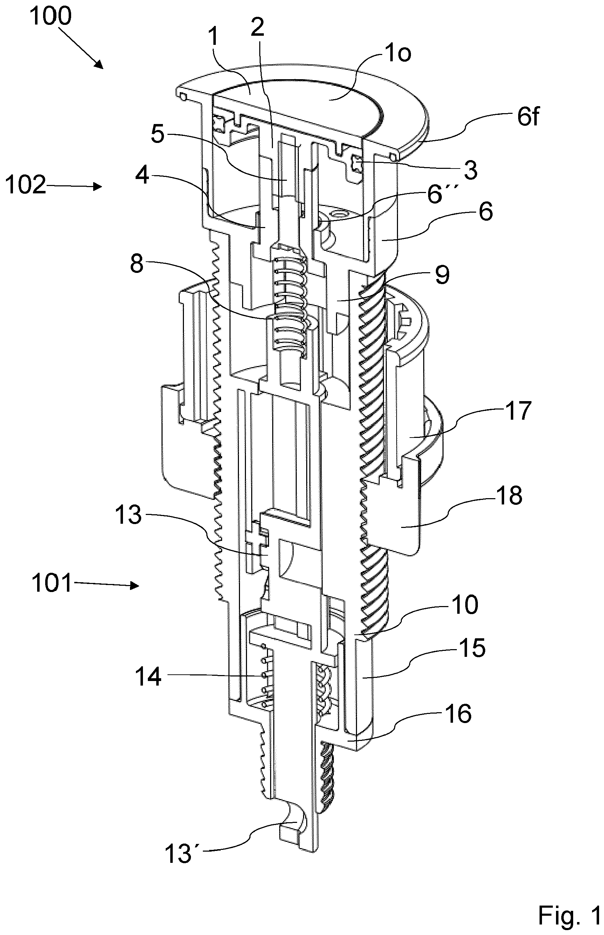

Figur 1 zeigt in schematischer Form eine bekannte Betätigungsvorrichtung in einer Explosionsdarstellung.

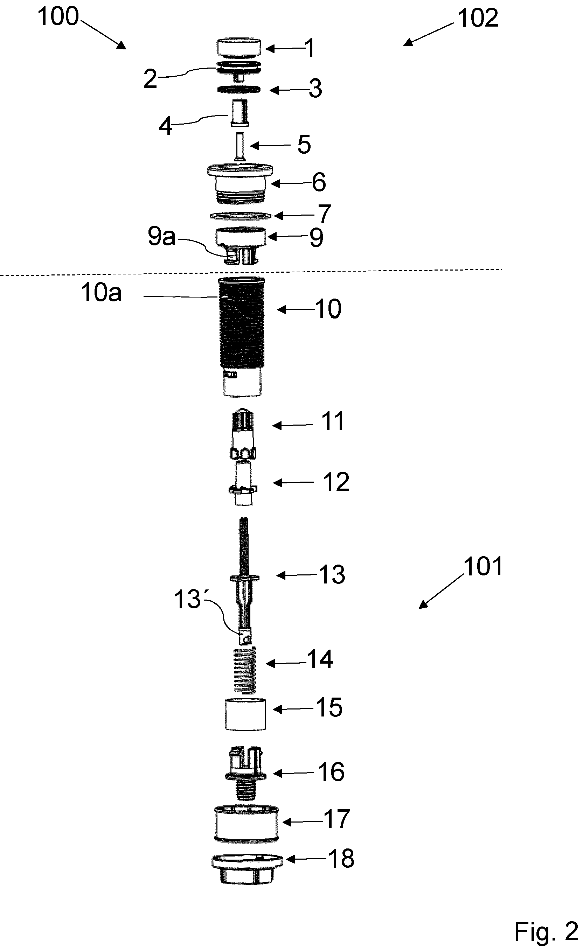

In Figur 1 ist eine Betätigungsvorrichtung 100 gezeigt. Die Betätigungsvorrichtung 100 weist eine Bedieneinrichtung 102 und eine Betätigungseinrichtung 101 auf. Die Bedieneinrichtung 102 umfasst dabei ein Druckknopfoberteil 1 und ein Druckknopfunterteil 2, wobei an dem Druckknopfunterteil 2 ein umlaufender Dichtring 3 angeordnet ist, sodass Schmutz oder Wasser nicht in das Innere der Bedieneinrichtung 102 eindringen können. In ein Gehäuse 6 der Bedieneinrichtung 102 wird auf der gegenüberliegenden Seite des Druckknopfs 1, 2 eine Adapterhülse 4 in eine Aussparung 6" eingeschoben. Mittels einer in die Adapterhülse 4 eingeführten Schraube 5 wird dann der Druckknopf 1, 2 an dem Gehäuse 6 verschieblich festgelegt. Weiterhin weist das Gehäuse 6 an seinem der Betätigungseinrichtung 101 zugewandten Ende - Unterteil 9 - Rastnasen (Bezugszeichen 9a, siehe Figur 2 ff.) auf, die in entsprechende Aussparungen (Bezugszeichen 10a, siehe Figur 2 ff.) eines Gehäuses 10 der Betätigungseinrichtung 101 eingreifen und die Bedieneinrichtung 102 an der Betätigungseinrichtung 101 festlegen. In dem Gehäuse 10 ist ein Rastmechanismus (nicht gezeigt), beispielsweise eine Herzkulissenführung bekannt aus der EP 3 328 719 B1, welche hiermit per Verweis einbezogen ist, angeordnet. Diese stellt zwei Rastpositionen eines mittels des Rastmechanismus entlang der Achse des Gehäuses 10 verschieblich angeordneten Kulissenelements 13 bereit, eine obere Rastposition und eine untere Rastposition. Letztere ist in Figur 1 dargestellt. Weiterhin umfasst der Rastmechanismus eine obere Feder 8 zur federbehafteten Beabstandung von Druccknopf 1, 2 und Kulissenelement 13 beziehungsweise zum Vorspannen des Druccknopfs 1, 2 und eine untere Feder 14, die als Energiespeicherfeder für den Rastmechanismus dient. Die obere Feder 8 ragt dabei in das Innere der Bedieneinrichtung 102 hinein.

Das Kulissenelement 13 umfasst an seiner dem Druckknopf 1, 2 abgewandten Seite eine Ankoppeleinrichtung 13' für einen Bowdenzug. Das untere Ende des Gehäuses 10 wird mit einem unteren Clip 16 verschlossen und die Klipsverbindung mittels einer Sicherungshülse 15 auf der Außenseite des Clips 16 gesichert. An den Clip 16 stützt sich die untere Feder 14 gegenüber dem Kulissenelement 13 ab. Auf der Außenseite des Gehäuses 10 ist wiederum eine Haltemutter 18 angeordnet, die einen das Gehäuse 10 umgebenden Gleitring 17, der mit einem Führungsflansch 6f des Gehäuses 6 zur Festlegung der Betätigungsvorrichtung 100 an einer Arbeitsplatte oder dergleichen zusammenwirkt, lösbar festlegt.

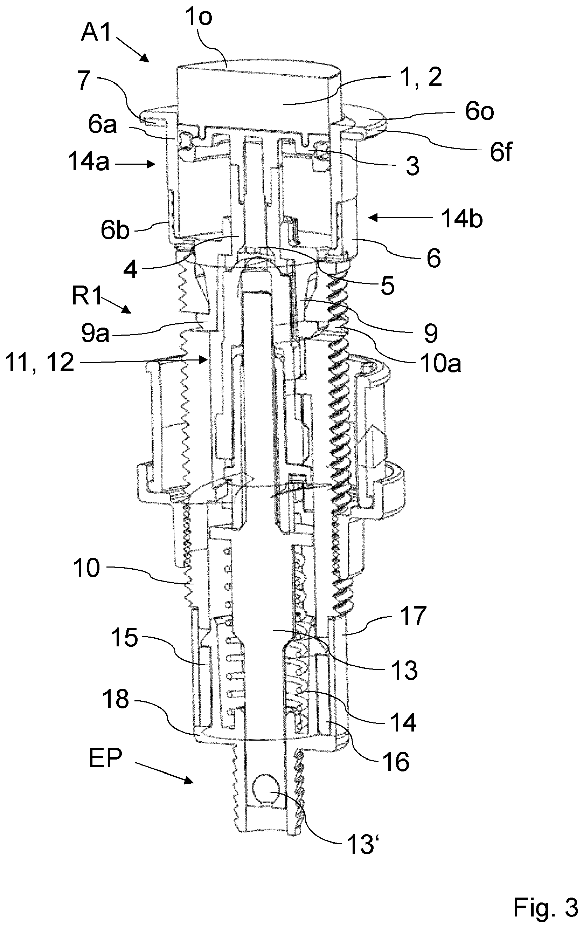

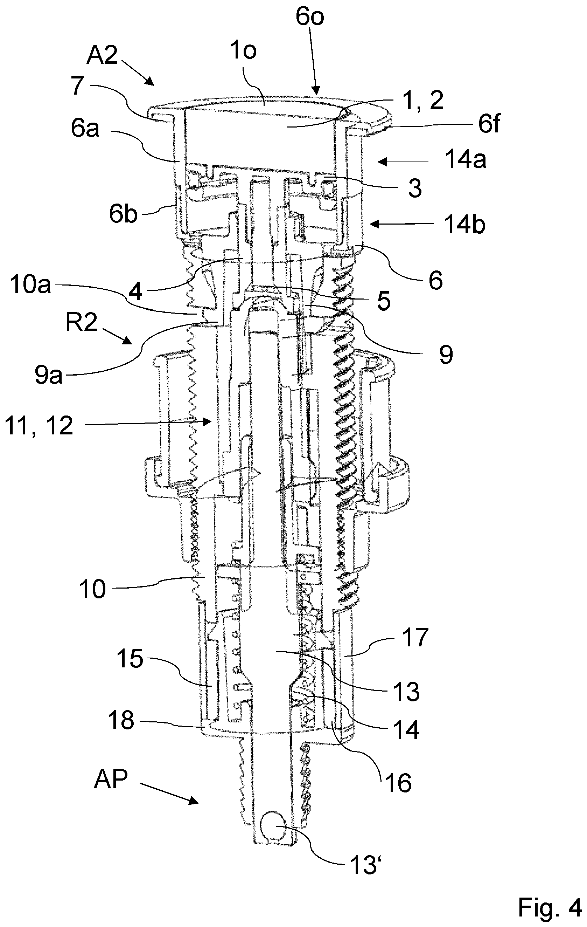

Figur 2 zeigt in schematischer Form in einer Explosionsdarstellung eine Betätigungsvorrichtung gemäß einer Ausführungsform der vorliegenden Erfindung, Figur 3 in schematischer Form und im Querschnitt eine Betätigungsvorrichtung gemäß Figur 2 in der Anzeigeposition geschlossen und Figur 4 in schematischer Form und im Querschnitt eine Betätigungsvorrichtung gemäß Figur 2 in der Anzeigeposition geöffnet.

In Figur 2 ist im Wesentlichen eine Betätigungsvorrichtung 100 gemäß Figur 1 gezeigt. Im Unterschied zur Betätigungsvorrichtung 100 gemäß Figur 1 ist bei der Betätigungsvorrichtung 100 gemäß Figur 2 nun anstelle des Rastmechanismus mit Herzkulissenführung eine Kugelschreibermechanik mit Hülse 11 und Rastnocken 12 angeordnet, die im Gehäuse 10 als Kulisse geführt werden. Das Funktionselement 13 dient dabei als Kulissenelement. Weiterhin kann auf die Feder 8 zum Vorspannen des Druckknopfs 1, 2 verzichtet werden. In die zweite Rastposition R2, die zu der zweiten Anzeigeposition A2 - bündiges Anordnen der Oberseite 1o, 6o des Druccknopfs 1, 2 und Führung 6, wie in Figur 4 gezeigt - korrespondiert, bewegt sich der Druckknopf 1, 2 aus der ersten Rastposition R1, die zu der ersten Anzeigeposition A1 - Druckknopf 1, 2 ragt nach oben aus der Führung 6 heraus - korrespondiert, selbständig auf Grund der Schwerkraft in Richtung der Betätigungseinrichtung 101. In dieser Rastposition R2 ist das Funktionselement 13 in seiner ausgezogenen Position AP, ragt also nach unten aus dem Clip 16 teilweise heraus. In die erste Rastposition R1, die zu der ersten Anzeigeposition A1 korrespondiert und in Figur 3 gezeigt ist, bewegt sich der Druckknopf 1, 2 aus der zweiten Rastposition R2, die zu der zweiten Anzeigeposition A2 korrespondiert, mittels des Rastmechanismus 11, 12 und der Feder 14. In dieser Rastposition R1 ist das Funktionselement 13 in seiner eingezogenen Position EP, ist also vollständig im Gehäuse 10 beziehungsweise Clip 16 angeordnet.

Weiter im Unterschied zu der Bedieneinrichtung 102 gemäß Figur 1 ist bei der Bedieneinrichtung 102 gemäß Figur 2 das Gehäuse beziehungsweise die Führung 6 zweiteilig (Bezugszeichen 6a, 6b) ausgebildet mit einem Festlegungsbereich 14b zur Festlegung an dem Gehäuse 10 und einem Führungsbereich 14a zur Führung des Druccknopfs 1, 2 zwischen der ersten und zweiten Anzeigestellung A1, A2. Die beiden Bereiche 14a, 14b können einstückig miteinander verbunden sein, können aber auch zweistückig, insbesondere aus unterschiedlichen Materialien, hergestellt sein oder dergleichen. Nach initialem Festlegen von Bedieneinrichtung 102 an der Betätigungseinrichtung 101 sind diese gemäß Figur 1 unlösbar miteinander verbunden. Darüber hinaus kann auf der Unterseite des Führungsflansches 6f eine Flachdichtung 7 angeordnet werden.

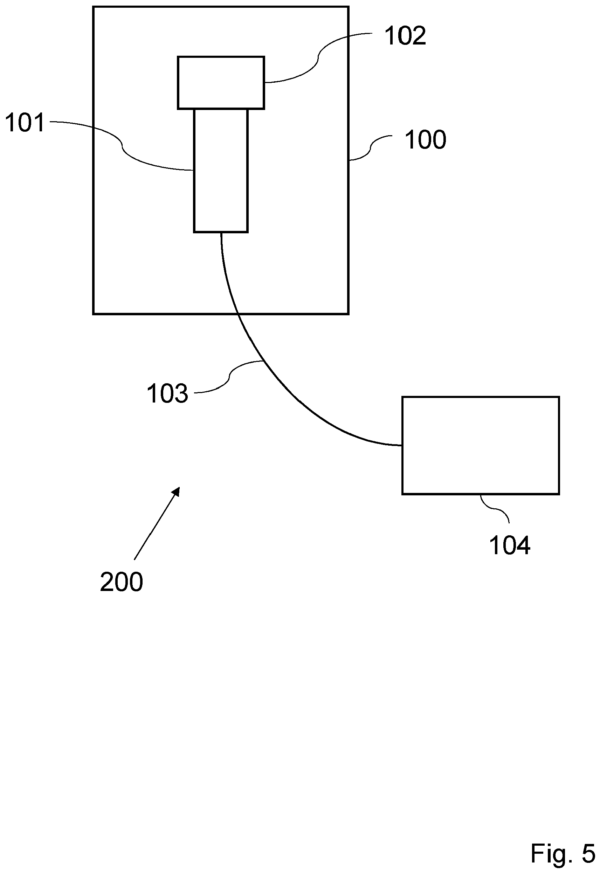

Figur 5 zeigt in schematischer Form ein Ablaufsystem gemäß einer Ausführungsform der vorliegenden Erfindung.

Im Detail ist in Figur 5 schematisch ein Ablaufsystem 200 gezeigt. Das Ablaufsystem 200 umfasst eine Betätigungsvorrichtung 100 für ein Ventil 104, mit dem dieses von einer Offen- in eine Geschlossenstellung und von einer Geschlossenstellung in eine Offen-Stellung überführt werden kann. Hierzu ist zwischen Betätigungsvorrichtung 100, genauer zwischen Betätigungseinrichtung 101 und Ventil 104 ein Kraftübertragungselement 103, beispielsweise ein mechanisches Element in Form eines Bowdenzugs, angeordnet. Wird nun die Bedieneinrichtung 102 der Betätigungsvorrichtung 100 betätigt, wird mittels des Bowdenzugs die entsprechende Bewegung des Druckknopfs in eine Bewegung des Ventils 104 - von einer Offen- in eine Geschlossenstellung oder von einer Geschlossenstellung in eine Offen-Stellung - umgesetzt. Auf diese Weise stellt die Betätigungsvorrichtung 100 eine Fernbedienungseinheit für ein Ventil eines Ablaufsystems bereit.

Zusammenfassend weist zumindest eine der Ausführungsformen der Erfindung zumindest eines der folgenden Merkmale auf und/oder ermöglicht zumindest einen der folgenden Vorteile:
- Feedbackanzeige.
- Reduzierte Anzahl von Bauteilen.
- Einfache Bedienbarkeit auch über Handballen oder Daumen.
- Kein Eintauchen des Druckknopfes in die Führung.
- Modul aufsteckbarer Kopf, insbesondere von Druckknopf und/oder Führung.
- Flexibilität hinsichtlich Geometrie, Farbe etc.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Druckknopfoberteil
- 1o: Oberseite Druckknopf
- 2: Druckknopfunterteil
- 3: Dichtring
- 4: Adapterhülse
- 5: Schraube
- 6: Gehäuse
- 6": Aussparung Gehäuse
- 6a: Gehäuse Führungsbereich
- 6b: Gehäuse Festlegungsbereich
- 6f: Führungsflansch
- 6o: Oberseite Gehäuse
- 7: Flachdichtung
- 8: Obere Feder
- 9: Unterteil
- 9a: Rastnase
- 10: Gehäuse
- 10a: Aussparung Gehäuse
- 11: Hülse
- 12: Rastnocke
- 13: Kulissenelement
- 13': Ankoppeleinrichtung
- 14: Untere Feder
- 14a: Führungsbereich
- 14b: Festlegungsbereich
- 15: Sicherungshülse
- 16: Clip
- 17: Gleitring
- 18: Haltemutter

- 100: Betätigungsvorrichtung
- 101: Betätigungseinrichtung
- 102: Bedieneinrichtung
- 103: Kraftübertragungselement
- 104: Ventil
- 200: Ablaufsystem

- EP: Eingezogene Position
- AP: Ausgefahrene Position

- R1, R2: Rastposition

## Patentansprüche

1. Betätigungsvorrichtung (100) zum Öffnen oder Schließen eines Ventils (104) einer Ablaufanordnung, umfassend
eine Betätigungseinrichtung (101), wobei
die Betätigungseinrichtung (101) eine Rastvorrichtung (10, 11, 12) umfasst, welche eine erste Rastposition (R1) und eine zweite Rastposition (R2) bereitstellt, und
eine Bedieneinrichtung (102) für die Betätigungseinrichtung (101), wobei die Bedieneinrichtung (102) ein Bedienelement (1, 2) umfasst, mit welchem die Rastvorrichtung (10, 11, 12) von der ersten Rastposition (R1) in die zweite Rastposition (R2) bringbar ist oder von der zweiten Rastposition (R2) in die erste Rastposition (R1), und wobei die Bedieneinrichtung (102) eine Führung (6) umfasst, in welcher das Bedienelement (1, 2) beim Wechsel zwischen einer ersten Anzeigeposition (A1) und einer zweiten Anzeigeposition (A2) geführt ist, wobei
die erste Anzeigeposition (A1) zu der ersten Rastposition (R1) und die zweite Anzeigeposition (A2) zu der zweiten Rastposition (R2) korrespondiert, wobei das Bedienelement (1, 2) in der zweiten Anzeigeposition (A2) auf derselben Höhe relativ zu der Führung (6) angeordnet ist,
**dadurch gekennzeichnet, dass**
die Betätigungseinrichtung (101) und die Bedieneinrichtung (102) separat ausgebildet sind und aneinander festlegbar sind, wobei im festgelegten Zustand aneinander der Bereich der Bedieneinrichtung (102) frei von elastischen Elementen, insbesondere von Federelementen, zur Bereitstellung der ersten und zweiten Anzeigeposition (A1, A2) ist.

2. Betätigungsvorrichtung (100) gemäß Anspruch 1, **dadurch gekennzeichnet, dass** die Rastvorrichtung (10, 11, 12) eine Kugelschreibermechanik aufweist.

3. Betätigungsvorrichtung (100) gemäß einem der Ansprüche 1-2, **dadurch gekennzeichnet, dass** die Rastvorrichtung (10, 11, 12) ein verschiebbar angeordnetes Funktionselement (13) aufweist, wobei das Funktionselement (13) gegenüber einem Gehäuse (10) der Betätigungseinrichtung (101) in eine eingezogene Position (EP) und in eine ausgefahrene Position (AP) bringbar ist, wobei die ausgefahrene Position (AP) zu der zweiten Rastposition (R2) und die eingezogene Position (EP) zu der ersten Rastposition (R1) korrespondiert.

4. Betätigungsvorrichtung (100) gemäß Anspruch 3, **dadurch gekennzeichnet, dass** das Funktionselement (13) eine Ankoppeleinrichtung (13') zur insbesondere lösbaren Ankopplung eines Kraftübertragungselements (103), insbesondere eines Bowdenzugs, aufweist.

5. Betätigungsvorrichtung (100) gemäß einem der Ansprüche 1-4, **dadurch gekennzeichnet, dass** die Betätigungseinrichtung (101) und die Bedieneinrichtung (102) im festgelegten Zustand aneinander unlösbar miteinander verbunden sind.

6. Betätigungsvorrichtung (100) gemäß einem der Ansprüche 1-5, **dadurch gekennzeichnet, dass** die Betätigungseinrichtung (101) und die Bedieneinrichtung (102) formschlüssig, insbesondere mittels einer Klipsverbindung, aneinander festlegbar sind.

7. Betätigungsvorrichtung (100) gemäß einem der Ansprüche 1-6, **dadurch gekennzeichnet, dass** die Führung (6) und das Bedienelement (1, 2) aus unterschiedlichen Materialien hergestellt sind.

8. Betätigungsvorrichtung (100) gemäß einem der Ansprüche 1-7, **dadurch gekennzeichnet, dass** die Bedieneinrichtung (102) einen Festlegungsbereich (14b) und einen Führungsbereich (14a) aufweist, wobei in dem Führungsbereich (14a) die Führung (6) für das Bedienelement (1, 2) angeordnet ist und wobei der Festlegungsbereich (14b) zum Festlegen der Bedieneinrichtung (102) an der Betätigungseinrichtung (101) ausgebildet ist.

9. Betätigungsvorrichtung (100) gemäß Anspruch 8, **dadurch gekennzeichnet, dass** ein Gehäuse (6b) des Festlegungsbereichs (14b) und ein Gehäuse (6a) des Führungsbereichs (14a) einstückig miteinander verbunden ausgebildet sind.

10. Betätigungsvorrichtung (100) gemäß einem der Ansprüche 1-9, **dadurch gekennzeichnet, dass** das Bedienelement (1, 2) austauschbar und/oder verdrehsicher in der Bedieneinrichtung (102) angeordnet ist.

11. Betätigungsvorrichtung (100) gemäß einem der Ansprüche 1-10, **dadurch gekennzeichnet, dass** eine Oberseite (6o) der Führung (6) und eine Oberseite (1o) des Betätigungselements (1, 2) in der zweiten Anzeigeposition (A2) im Wesentlichen bündig zueinander angeordnet sind.

12. Betätigungsvorrichtung (100) gemäß einem der Ansprüche 1-11, **dadurch gekennzeichnet, dass** die Führung (6) einen Führungsflansch (6f) zur Anlage an einer Ebene, insbesondere einer Spülenoberfläche oder einer Arbeitsplatte, aufweist.

13. Betätigungsvorrichtung (100) gemäß einem der Ansprüche 1-12, **dadurch gekennzeichnet, dass** ein Dichtelement (3), vorzugsweise in Form eines X-Rings, zwischen Betätigungselement (1, 2) und Führung (6) angeordnet ist, insbesondere wobei das Dichtelement (6) am Betätigungselement (1, 2) angeordnet ist.

14. Betätigungsvorrichtung (100) gemäß Anspruch 13, **dadurch gekennzeichnet, dass** das Dichtelement (3) an das Betätigungselement (1, 2) angespritzt ist.

15. Ablaufsystem (200), umfassend
eine Betätigungsvorrichtung (100) gemäß einem der Ansprüche 1-14,
ein Kraftübertragungselement (103) und
ein Ventil (104), wobei
das Kraftübertragungselement (103) einerseits mit der Betätigungsvorrichtung (100), andererseits mit dem Ventil (104) verbunden ist, derart, dass mittels der Betätigungsvorrichtung (100) das Ventil (104) von einer geschlossenen in eine geöffnete Position oder von einer geöffneten in eine geschlossene Position bringbar ist.
